# EUROPEAN PATENT APPLICATION

(11) **EP 1 237 082 A1**
(43) Date of publication of application: **04.09.2002**
(21) Application number: 01301885.8
(22) Date of filing: 01.03.2001
(51) Int. Cl.: G06F 9/50

(54) **Method and system for distributed processing management**

(71) Applicant: BRITISH TELECOMMUNICATIONS public limited company, London EC1A 7AJ (GB)
(72) Inventor: The designation of the inventor has not yet been filed
(74) Representative: Dutton, Erica L. G.

(57) **Abstract**

A system for distributed process management comprising a plurality of units of software for installation on computing platform, and further software for controlling the operation of the plurality of units in use of the system,
wherein each unit of software is provided with means for communicating with other units of software, and at least some of the units of software are further provided with means for providing one or more elements of a software process,
said further software being capable of defining at least one set of software units and controlling communications by the units in the set to be limited to communication only with other units of the set.
The proposed system addresses the problems of robustness and scalability of multi-agent systems by using lightweight agents. The system is written in JAVA and can be used for information processing.

## Description

The present invention relates to a method and system for distributed processing management and finds particular application in information management.

It is known to use software agent systems (where an agent comprises software code and usually at least local data which together provide an entity which is to some extent autonomous and proactive) for the manipulation and provision of information to users. These software agent systems are one means of implementing decentralised computational processes.

There also exist software technologies for distributed computing, such as the Common Object Request Brokerage Architecture (CORBA) that can provide functionality for distributed computing similar to some of that provided by software agent systems.

In the construction of such software systems a contrast can be drawn between centralised and decentralised approaches to the design and operation of the software. Centralised approaches have the advantage that the software may be better understood in advance of execution, and that the flow of control is in principle clear. But they may also have the disadvantage that the design is very inflexible if the requirements or use of the software changes between initial design and implementation. Hence there is an interest in more decentralised systems that start with simple components and combine them to produce more complex systems. Decentralised approaches have the advantage that individual components can be well understood, and can be moved around if requirements for the system change. The disadvantage is that the flow of control in the system may be much more unpredictable.

Because the development of particular software agent systems from scratch for each application could lead to a lot of duplication of software, a number of software agent toolkits have been developed that provide the means of constructing a variety of different software agent systems from one set of tools. While existing software agent toolkits, and other software technologies, do to some extent implement decentralised computing systems, they do suffer from problems of:
ξ Robustness [i.e. how to ensure that the system performs to the required standard despite changes to its software environment that may be disruptive to agent function.]
ξ Scalability [i.e. how to ensure that what works with relatively few agents in a test application works as well with many agents in a real-world application.]

Robustness and scalability have been addressed in a number of ways in existing software agent systems, with varying degrees of success. These are important issues to address if such software technologies are to provide solutions to industrially or commercially significant application problems.

According to the present invention, there is provided a method or system as set out in the accompanying claims. Further inventive aspects of the invention are described below and set out in the drawings.

A software system referred to herein as the "DIET" system will now be described as an embodiment of the present invention, by way of example only, with reference to the accompanying drawings in which:
Figure 1 shows a block diagram of components of the DIET system, in particular the relationship between software agents (usually referred to as "infohabitants" in the following description) and an environment in which they are located, showing use of proxies;
Figure 2 shows schematically the use of threads, available by means of an operating system of computing platform supporting the system, and their allocation to infohabitants by the environment of Figure 1;
Figure 3 shows a basic structure of an infohabitant, in particular in relation to the response of the software agent to external events;
Figure 4 shows in flow diagram a process by means of which a new infohabitant is created;
Figure 5 shows in flow diagram a process for handling infohabitant migration. Figure 5 a) shows the process at the source environment and Figure 5 b) shows the process at the destination environment;
Figure 6 shows in flow diagram a process for handling incoming messages for infohabitants;
Figure 7 shows in flow diagram a process for handling incoming connection notifications for infohabitants;
Figure 8 shows in flow diagram a process for implementing message delivery;
Figure 9 shows in flow diagram a process for setting up new connections between infohabitants;
Figure 10 shows in flow diagram an alternative process for setting up new connections between infohabitants;
Figure 11 shows in flow diagram an execution flow for a process to be carried out by an infohabitant;
Figure 12 shows in flow diagram a process for handling a request for setting up a new connection;
Figure 13 shows in flow diagram a process for handling a request to send a message. Figure 13 (a) shows the process at the source end of the connection and Figure 13 (b) shows the process at the receiving end of the connection;
Figure 14 shows, in flow diagram, functionality of an infohabitant. Figure 14 (a) shows its functionality in handling new connections and Figure 14 (b) shows its functionality in handling incoming messages;
Figure 15 shows schematically an example configuration of a basic infohabitant in connecting three client infohabitants to two server infohabitants;
Figure 16 shows a screen shot of an application running on the DIET system;
Figure 17 shows schematically a general architecture for a DIET system.

In the following, reference is made to "Decentralised Information Ecosystem Technologies" (DIET) and to the DIET platform. These are references to embodiments of the present invention.

Distinguishing features of embodiments of the present invention over known systems are:
ξ The specific system of proxies regulating interaction between agents and with the environment, ensuring that all interaction is indirect.
ξ The ability to associate a context with each communication between agents, allowing agents to be lightweight and interactions to execute efficiently.
ξ The rejection of messages, connections or migration as a mechanism for controlling the overall activity and memory use of the system
ξ The naming scheme for agents based on Bitstrings, allowing access to individual agents by way of their identity or using the particular family they belong to.
ξ The use of an event portal by each infohabitant to efficiently handle all incoming events
ξ The ability to target specifically where to add listeners for observing events
ξ The indirection of service requests through individual agents.
ξ The provision for reusable threads and the sharing of threads.
ξ The provision for resource accounting.

### The DIET Approach

The DIET has been developed initially with comparatively lightweight agents. If individual agents can be kept as lightweight as possible, many more agents can be incorporated in the system, and their numbers can be varied much more easily. While the development of lightweight agents precludes the inclusion of some computationally intensive capabilities at the individual agent level, there is potential for the emergence of such properties in the overall system, through interactions between agents. This emphasis on lightweight agents and bottom-up interaction does not however preclude the incorporation of more heavyweight agents where required when extending this platform. More heavyweight agents may, for example, be needed to include sophisticated reasoning or communication capabilities. Nor does it preclude the use of more top-down Artificial Intelligence techniques, which complement and enhance the functionality provided by bottom-up interactions.

This lightweight, bottom-up design should also contribute to the aim of supporting adaptive responses in the platform. Lightweight agents could more easily serve as the subject of population-based adaptive, evolutionary, algorithms. In addition, the diversity of possible configurations possible in interactions between lightweight agents should assist the search for robust solutions, and allow easy modification if these are not initially found.

The flexibility of the design approach of the DIET software platform makes it suitable to support for instance a variety of different information manipulation applications, based upon a set of information processing operations that will be required by some or all applications. At the same time it should provide a platform for the study of research issues concerning interactions in multi-agent systems.

### IMPLEMENTATION

The DIET platform is a software system written in the Java programming language. Because Java is an object-oriented programming language, all components of the system mentioned here are objects in the object-oriented programming sense. It will run on any computer which has a suitable Java Virtual Machine installed. Interaction with the system by a user or users will take place via a graphical user interface implemented on the user's computer through its monitor and input devices such as mouse and keyboard.

(It will be understood that a "Class" is a basic concept in Java/Object-Oriented programming. A class is a object-oriented module that describes the implementation of a "type" (class) of objects and the type of data associated with it. Every object is an instance of a specific class. Different objects of the same class can differ in the contents of their data.)

### OVERVIEW

"Worlds" and "environments" are known concepts in multi-agent systems, implemented for instance in Java developments. The DIET platform implements one World per Java Virtual Machine. Within this all other elements of the system exist. There can be multiple Worlds simultaneously as multiple Java Virtual Machines are implemented. Within each World, the DIET platform implements one or more Environments. Environments are locations where DIET agents (Infohabitants) reside. Environments provide basic services to Infohabitants: Infohabitants can move to other Environments and can establish pair-wise connections with other Infohabitants in a common Environment. Infohabitants can communicate when they are connected.

The manner in which an Environment acts as a location in the DIET platform is as follows. It acts as a location to Infohabitants because the Environment they reside in controls which Infohabitants it can communicate with directly (because Infohabitants can only set up connections to Infohabitants in the same Environment).

### THE DIET SOFTWARE PLATFORM

The DIET software platform is designed to form the base for information management applications. To be useful in practice, the framework needs to support applications that are:
adaptive: Information gets updated constantly, and new information is generated. Users of the information, and their preferences, as well as the system load and infrastructure, can also change. To operate efficiently, information management applications have to adapt to these changes.
scalable: There is a massive amount of information available in the real world, consider for example the World Wide Web. For an information management system to be useful, it need to be built without any implicit limits on its size.
robust: Failures are inevitable in large-scale, dynamic, distributed systems. So the system needs to be able to cope with them. It needs to handle failing hardware, as well as cope with high system load. Performance should gracefully deteriorate when parts of the system fail.
decentralised: A lot of information is located in a distributed form, as the World Wide Web demonstrates. Decentralisation also helps to enhance scalability, by avoiding critical bottlenecks, and robustness, as it reduces the reliance on particular parts of the system.

The DIET platform has therefore been designed with these properties in mind.

### Layered architecture

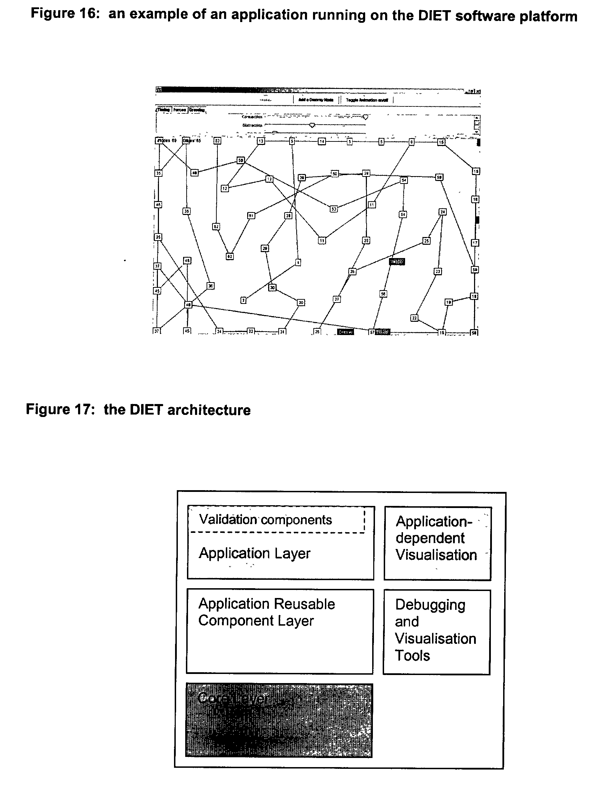

Referring to Figure 17, the DIET platform architecture has two layers, a core layer and an Application Reusable Component (ARC) layer. When an application is built using the DIET platform, it creates a third layer: the application layer.

The core layer provides the fundamental functionality available to all implementations in the DIET architecture, but also embodies the constraints under which all DIET agents must operate. The ARC layer includes optional components that are useful to various applications. An example is the CarrierPigeon for communicating between different environments which is further described below. It also contains general components that allow for the validation and testing of DIET applications, and for visualisation of the components within the platform. The application layer contains application-specific code. Associated with the application layer may also be validation components, to enable validation of the applications developed using the DIET platform.

An example of general visualisation and testing components the ARC layer might provide are EventDumperListeners. These listen to all events in (specific parts of) the system and display (on the computer monitor) a brief description of every event that occurs (e.g. every infohabitant that migrates, each message that is sent, every connection that is set up).

### CORE LAYER

### KERNEL

The DIET Kernel provides the most basic functionality on which the rest of the DIET software is built. The functionality it provides can be used, but not modified, by higher layers. The kernel embodies the rules that all Infohabitants have to adhere to.

The two fundamental components defined by the DIET kernel are infohabitants (that is, software agents) and environments. The only capability built into every infohabitant is the ability to communicate with each other. Every infohabitant has an identity consisting of a binary name tag and a binary family tag. The name tag allows infohabitants to be uniquely identified, and the family tag can be used to look up infohabitants by functionality. Family tags can be used as a shared identifier for a group of agents, or as an identifier which can be set according to an agreed rule, or as an evolved identifier which externally distinguishes a specific sub-species of adaptive agent.

An environment provides a location for infohabitants to reside in. It also provides infohabitants access to the basic services provided by the DIET kernel. An environment always resides on a single computer. However, one computer can host multiple environments, and DIET is designed to run on multiple computers.

The DIET kernel has been designed to be as lightweight as possible. It provides only essential services, and always in a very basic way. This helps to make it more scalable, and enables it to deliver its functionality quickly and efficiently. Robustness is explicitly addressed in the DIET core by directly exposing infohabitants to potential failure. This allows them to adapt to it and change their behaviour accordingly.

Infohabitants and environments are described in more detail below.

### INFOHABITANTS

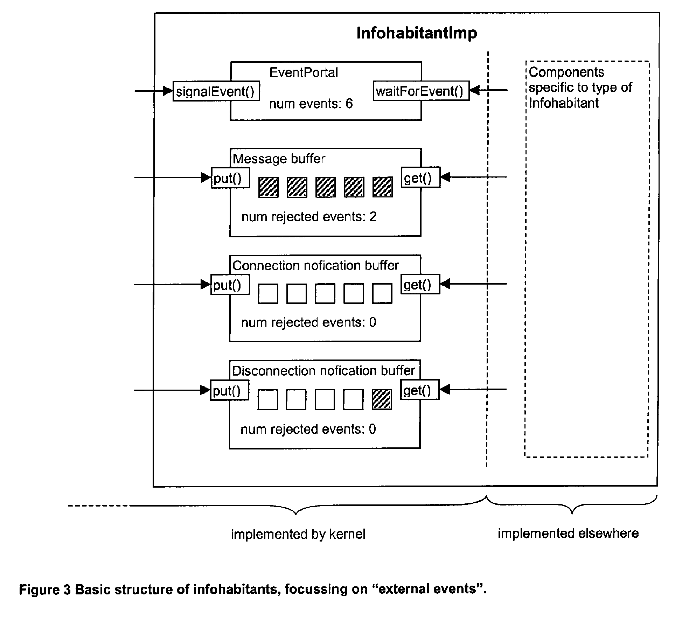

Referring to Figure 3, an infohabitant is a software agent. As a basic minimum, it is provided with means for communicating with other infohabitants. It will also be provided with software code for performing one or more series of operations in use. To run the code, each infohabitant has to be allocated a thread by the operating system of the computer on which it is installed. Control of thread allocation is provided by the environment and this is further described below under "Allocation of Threads".

### Event Portal

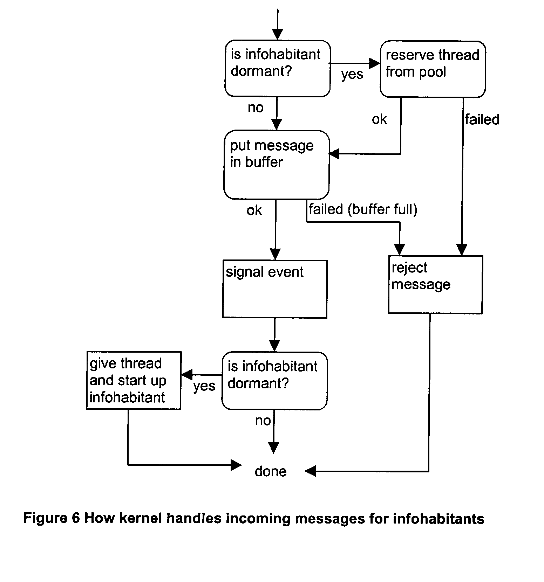

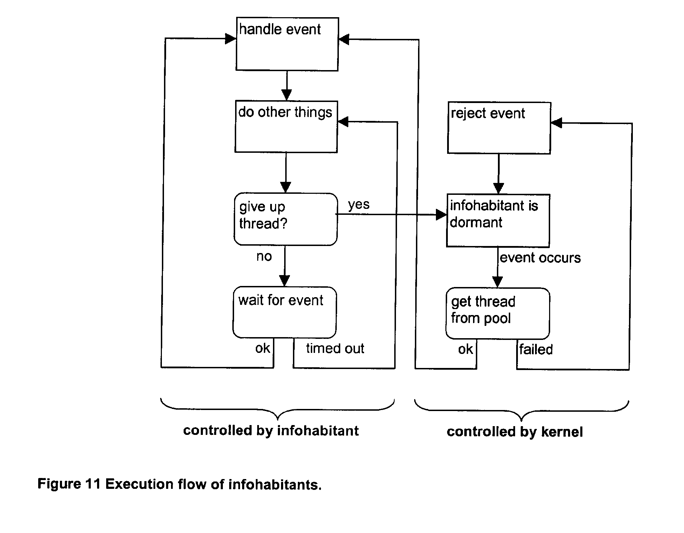

For every infohabitant, events that signal incoming messages, new connections, etc. are registered centrally by way of an EventPortal. This allows Infohabitants to use their Thread efficiently because its Thread can block until a new events occurs. Figure 3 gives an impression of the way it is used. Figure 6 shows when the kernel signals an event to an Infohabitants EventPortal. Figure 11 shows how and when an Infohabitant typically uses the ability to wait for an event.

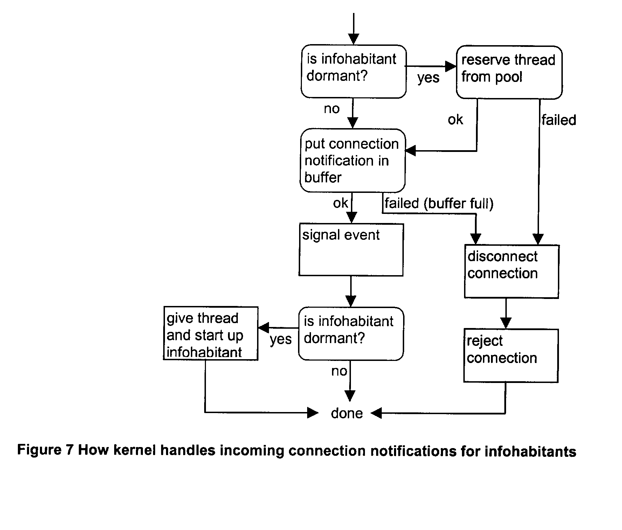

Figure 3: each of the three buffers has an additional counter that tracks how many attempts have been made to put an item in the buffer that failed (because the buffer was full, see Figures 6 and 7). Although the infohabitant that owns the buffer is not directly notified when this happens, the counter ensures that the infohabitant can be aware of these rejections.

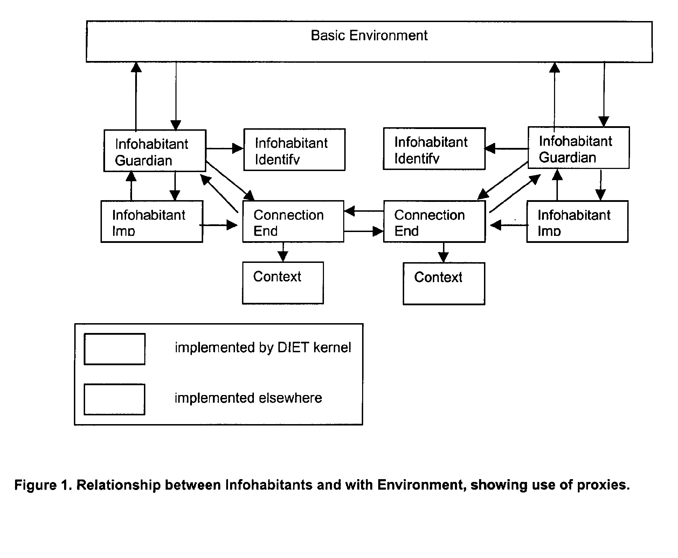

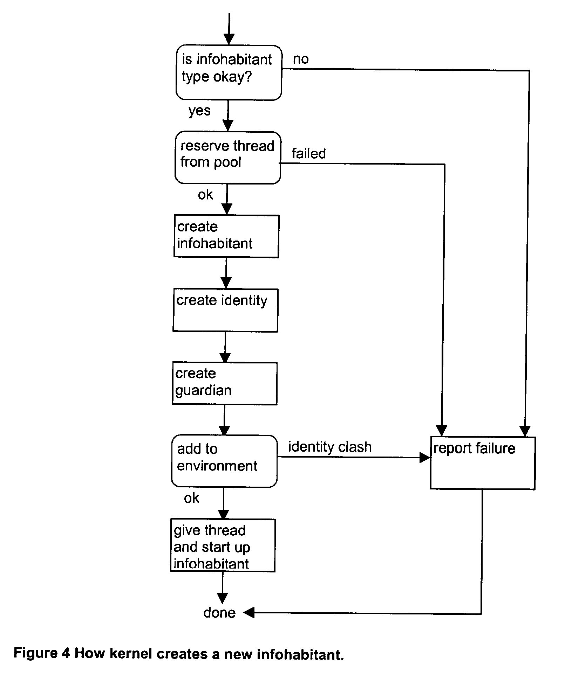

Figure 4: "create guardian" creates the InfohabitantGuardian (see Figure 1) for the infohabitant. "report failure": the initiating infohabitant is signalled by an exception that the creation failed (when no exception occurred, the attempt was successful)

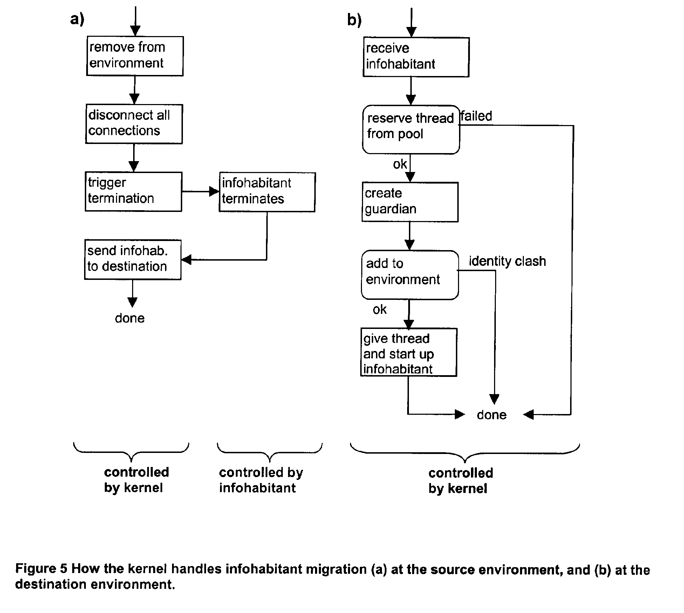

Figure 5: "trigger termination": signals the infohabitant to terminate its execution. Control goes briefly back to the infohabitants code ("infohabitant terminates"), where the infohabitant can perform some additional clean up (e.g close open files). However, since it is already disconnected from the environment it cannot contact the environment or any other infohabitants. As soon as the infohabitant's execution has finished, control goes back to the kernel which sends it to the destination environment.

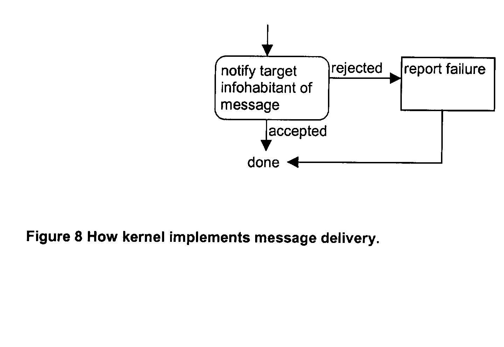

Figure 8: "notification of target infohabitant": as shown in Figure 6. "report failure": the initiating infohabitant is signalled that the message was not successfully sent.

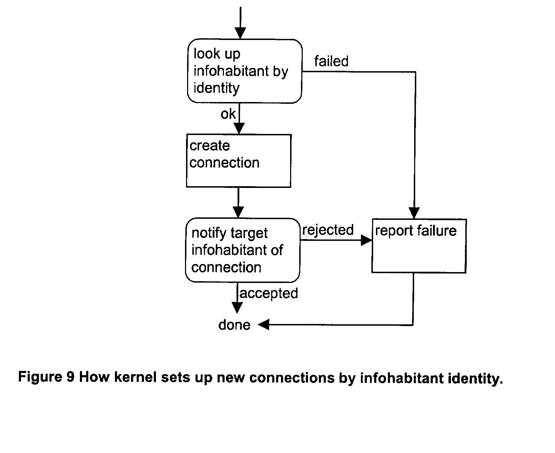

Figure 9: "notification of target infohabitant": as shown in Figure 7. "report failure": the initiating infohabitant is signalled that a connection was not successfully set up.

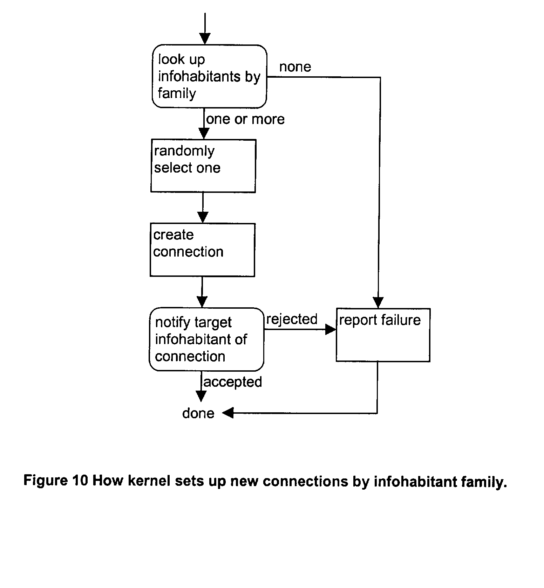

Figure 10: "notification of target infohabitant": as shown in Figure 7. "report failure": the initiating infohabitant is signalled that a connection was not successfully set up.

### ENVIRONMENTS

### Basic services

*Environments only provide a bare minimum of basic services to Infohabitants.* Other services can be built on top of these basic services, and do not need to be provided by the DIET kernel. The advantages of this approach are that the Environment is more suitable for hosting many Infohabitants and that the implementation of higher level services can be adapted to the needs of the specific DIET application. The approach is similar to the "micro-kernel" in a system known as MADKit (reference given below). Their micro-kernel is intentionally limited as well, although it differs in the services that it provides.

The basic services provided by each Environment are:
ξ New Infohabitants can be created.
ξ Infohabitants can move to another Environment
ξ Infohabitants can connect to other Infohabitants in the Environment

*The services provided by Environments are unreliable.* The Environment provides the services when it (easily) can, but fails immediately when it cannot. For example, every Environment can have a strict limit on the number of Threads that it can allocate (this is discussed further under the heading "Allocation of threads" below). This means that creation of an Infohabitant or its migration fails when there is currently no thread is available. In both cases, the Infohabitant dies.

The idea of putting a strict limit on certain resources, and thereby making the services that relate to it unreliable, is used at various places within the DIET platform. It makes the platform more robust because it will, for instance, not run out of memory when the system load is high. Instead, it makes high system load visible to Infohabitants and forces them to adapt to it.

### Allocation of Threads

The Environment is responsible for allocating Threads to Infohabitants. A Thread is an Operating-System concept and can be defined as a context sequentially executing instructions. On creation, Environments provide every Infohabitant with their own Thread. The DIET platform does not prevent Infohabitants from creating and using additional Threads, but it can be advantageous to strictly limit every Infohabitant to use one Thread at most.

*Infohabitants can temporarily give up their Thread.* When an Infohabitant has nothing to do, it can give up its thread. Infohabitants without a Thread are Dormant. When an event occurs the DIET kernel will attempt to give the Infohabitant a thread to handle the event. Figure 6 for instance shows what happens when a message is sent to an Infohabitant. Similar block diagrams can be shown when a connection is created or destroyed. This technical implementation detail means that the number of Threads required by the platform can be relatively low. As a result, you can run simulations on a single computer with significantly more infohabitants than would otherwise be possible. MADKit is another multi-agent system that does not require a Thread for each Agent. However, their implementation is significantly different and deviates from the autonomy normally associated with agents in agent systems.

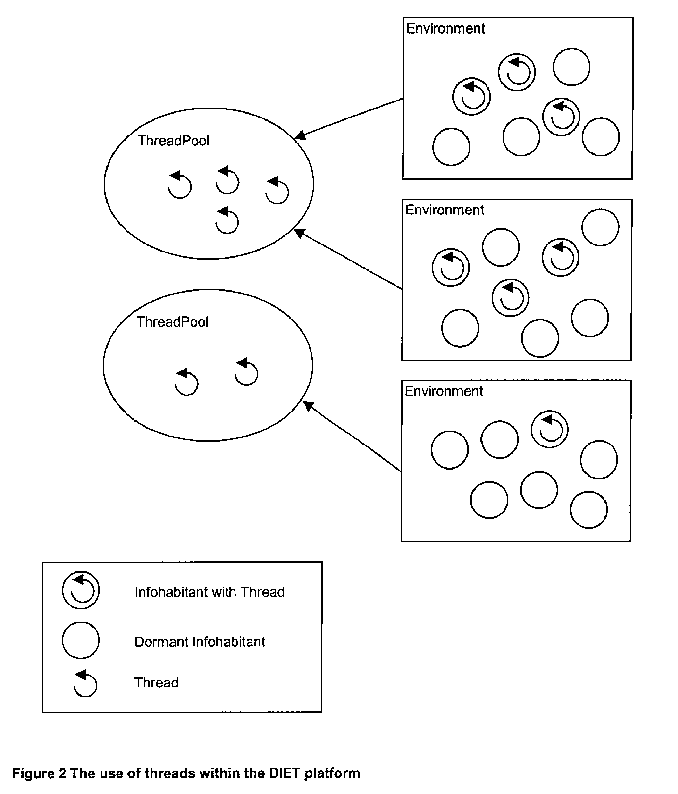

Every Environment has access to a ThreadPool. A ThreadPool limits the number of threads allocated by it that are in use at any moment. It will not provide another thread as long as the limit is reached. An Environment can have its own ThreadPool, but it can also be shared by multiple Environments (see also Figure 2). In the latter case you can limit the total number of Threads used by a group of Environments without fixing the allocation of Threads to each Environment.

When Threads are discarded, the ThreadPool is automatically notified. The Thread can then be put back into the pool, which avoids the overhead associated with creating and destroying Threads. This way of reusing threads is, however, not unique, and has for instance been applied in the Voyager ORB.

### Naming scheme

Every Infohabitant has an Infohabitantldentity that consists of two bitstrings, a Name Tag and a Family Tag. The Name Tag can be used to identify Infohabitants and is randomly initialised by the DIET kernel when the Infohabitant is created. As long as the Name Tags are sufficiently long, the probability that two Infohabitants have equal names is effectively zero. For instance, when tags are 128 bits long, the probability that two or more infohabitants in a group of one million have the same name is 1.5 x 10⁻²⁶. The advantage of this approach is that it is decentralised and thus scales well.

The Family Tag can be used to distinguish between different types, or families of Infohabitants. It is set by the Infohabitant when it is created, and remains constant throughout the lifetime of each Infohabitant.

Environments provide two ways of looking up Infohabitants. To connect to an Infohabitant, you either specify a complete identity or a Family Tag. The former can be used to look up specific Infohabitants, whereas the latter can be used to look up Infohabitants by functionality. By only providing basic ways of connecting to Infohabitants this can be done quickly (even when there are many Infohabitants) while still using relatively little memory.

Three example infohabitant identities are shown below:

| | | | |
|---|---|---|---|
| A | identity=(name | = 01100101, | family = 11000101) |
| B | identity=(name | = 1010110011, | family = 010011) |
| C | identity=(name | = 00010001, | family = 11000101) |

Here Infohabitant A and Infohabitant C have equal family tags. All name tags are unique, but that is not suprising as these are all initialised randomly. Note, in real applications tags are typically longer (e.g. 128 bits). A name tag and a family tag do not necessarily have to be of the same length. Also, the length of name tags and/or family tags can be different for different infohabitants.

### Use of proxies

Infohabitants do not have a direct reference to their Environment, nor do they have direct references to each other.

The InfohabitantGuardian proxy ensures that Infohabitants obey the constraints of the architecture. For instance, it prevents that an Infohabitant has access to more than one Environment at once. The proxy also maintains its identity, to ensure that it remains fixed throughout the Infohabitant's lifetime. See Figure 1 for details. Here Infohabitantlmp is the implementation of the Infohabitant. Some of its functionality is provided by the kernel (e.g. there is code to ensure that every Infohabitant implements the behaviour shown in Figures 6 and 7), but most is specific to the Infohabitant's function and therefore not implemented by the kernel.

**Table 1:**

| Summary of the components and functionality provided by the InfohabitantGuardian proxy | |
|---|---|
| Variables/components | Functionality |
| Reference to Environment | Provides the Infohabitant access to the basic services provided by the |
| Reference to Infohabitantlmp (the actual Infohabitant) | |
| | Environment |
| Reference to Infohabitantldentity | Maintains the Infohabitants connections |
| List of Connections | Maintains a list of Listeners and notifies them when connections are created, rejected and destroyed (optional: Basic resource accounting) |
| Number of available connections | |
| List of Listeners | |
| Reference to ListenerCookie | |

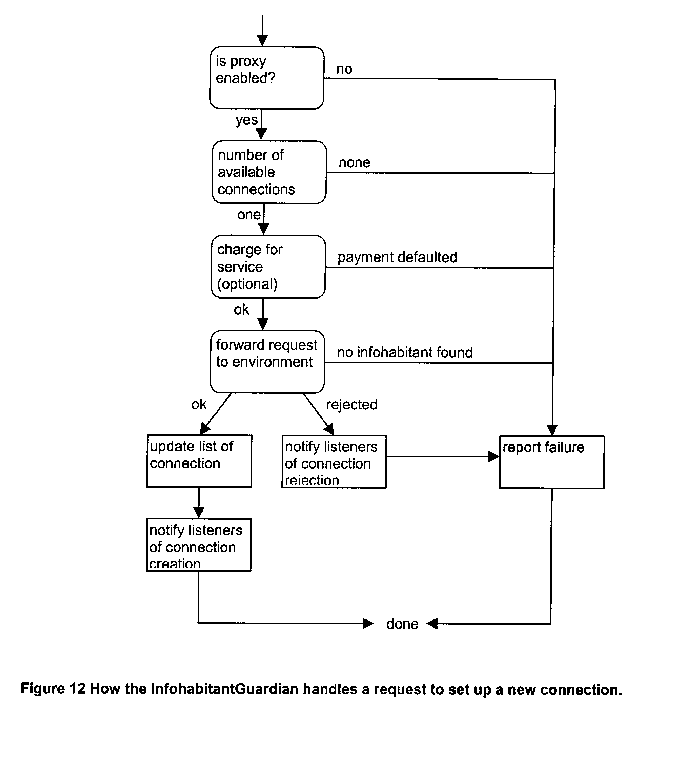

Table 1 provides some additional detail about the InfohabitantGuardian. The functionality it provides is now examined in some more detail. Firstly, an Infohabitant can use its InfohabitantGuardian proxy to access the services provided by the Environment. This is the only way it can access these services. The DIET kernel can therefore easily prevent the Infohabitant from accessing the Environment by disabling the proxy. This, for instance, happens when the Infohabitant wants to migrate (see "a)" of Figure 5). Secondly, the proxy maintains all the Infohabitants connections, as well as how many new ones it is currently allowed to initiate. This allows it to check if an infohabitant can create a connection before forwarding the request to the Environment. It also allows the proxy to automatically destroy all connections when the Infohabitant is removed from the Environment. Thirdly, the proxy also maintains a list of listeners that it notifies whenever a connection is created, rejected or destroyed. Objects interested in these events can add themselves as a Listener to the InfohabitantGuardian for the Infohabitant they want to observe. One noteworthy feature is that for objects to register as a Listener, they need to provide an additional reference to a ListenerCookie. If their ListenerCookie is not equal to the one maintained by the InfohabitantGuardian, their request is ignored. This mechanism can be used to prevent Infohabitants from adding themselves as a listener. This is necessary, because when Listeners are notified they receive details about the event that need to be hidden from Infohabitants for the system to remain secure. So, in practice, only the debugging and visualisation tools are given the ListenerCookie, but it is hidden from all Infohabitants (for details, see section on World below). Fourthly, in a DIET platform that uses resource accounting, the InfohabitantGuardian is a convenient place to charge every infohabitant for the services it uses. One advantage is that it hides these details from the Environment whose implementation can therefore be substantially the same for a non-resource accounting and a resource accounting DIET kernel. Figure 12 shows how all these different functions relate. It shows how the InfohabitantGuardian handles a request to set up a new connection.

The ConnectionEnd proxy (also shown in Figure 1) allows Infohabitants to communicate without directly referencing each other. This offers every Infohabitant basic protection against malicious Infohabitants.

**Table 2:**

| Summary of the components and functionality provided by the ConnectionEnd proxy | |
|---|---|
| Variables/components | Functionality |
| Reference to Environment | Provides the Infohabitant with ability to communicate with other Infohabitant |
| Reference to InfohabitantGuardian | |
| Reference to other ConnectionEnd | Provides Infohabitant access to Context |
| Reference to Context | Maintains a list of Listeners and notifies them when messages are send, accepted, and rejected. (optional: Basic resource accounting) |
| Flag that controls if connection is enabled | |
| List of Listeners | |
| Reference to ListenerCookie | |

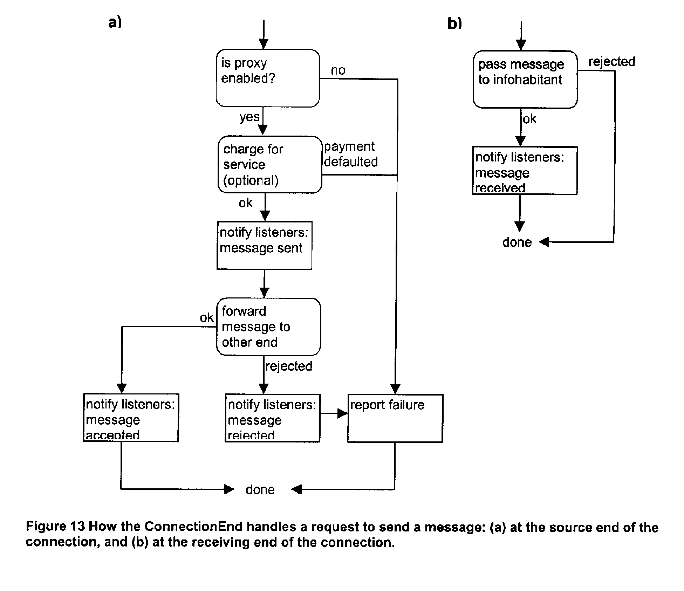

Table 2 provides some additional detail about the ConnectionEnd. It also supports listeners. Once again, Listeners need to "know" what the ListenerCookie is to register themselves (once again for security, it for instance prevents malicious Infohabitants control over other Infohabitants). Figure 13 shows how the ConnectionEnd combines several of its functions when it is used to send messages.

Both the InfohabitantGuardian and the ConnectionEnd proxy are dedicated to a single relationship (either between an infohabitant and its environment, or between two infohabitants). This has several benefits. Firstly, it enables the kernel to selectively and efficiently disable certain connections or disallow specific infohabitants access to an environment. Secondly, it can be used to efficiently observe the interactions with specific Infohabitants and their Environment or the interactions between pairs of Infohabitants, using the Listener design pattern as described in Erich Gamma, Richard Helm, Ralph Johnson and John Vlissides. *"Design patterns: Elements of Reusable Object-Oriented Software",* 1995, Addison-Wesley. Thirdly, it also enables Infohabitants to efficiently associate a state (a so-called Context) with each of their connections.

The concept of Proxies is a well-known design pattern. Use of proxies for access control, dynamic revocation and usage metering is well-known. IBM Aglets for instance uses proxies for security and location transparancy. The MADKit development kit has also been designed such that only the kernel has direct reference to agents. Voyager uses proxies for transparant access to remote objects. Adjanta uses proxies to provide secure access to "resources".

### Publications relevant to some of the known material mentioned above are as follows:

Gutknecht, O & Ferber, J 1997 MadKit: Organising heterogeneity with groups in a platform for multiple multi-agent systems. Technical Report 97188, LIRMM. 161, rue Ada - Montpellier - France, December 1997.

### For Aglets, a central reference is a book:

Lange, D. & Oshima, M. 1998 Programming and Deploying Mobile Agents with Java Aglets. Peachpit Press, Berkeley.

### The following paper gives an overview of the Aglet API:

Lange, D. & Oshima, M. 1998 Mobile Agents with Java: the Aglet API. World Wide Web Journal.

### The following paper refers to Aglets identities, proxies and contexts in the context of security:

Karjoth, G., Lange, D.B. & Oshima, M. 1997 A security model for Aglets. IEEE Internet Computing July-August 1997, 68-77.

### Adjanta: the following paper gives an overview of the system:

Karnik, N.M. & Tripathi, A.R. 1998 Agent Server Architecture for the Ajanta Mobile-Agent System. In: Proceedings of 1998 International Conference on Parallel and Distributed Processing Techniques and Applications (PDPTA'98), Las Vegas, July 1998.

### and this paper goes into some detail on the use of proxies:

Tripathi, A. & Karnik, N. 1998 Protected resource access for mobile agent-based distributed computing. In: Proceedings of ICPP Workshop on Wireless Networking and Mobile Computing, Minneapolis, August 1998.

### WORLD

To set up a DIET simulation you need access to the World. Also, debugging and visualisation tools require access to the World. However, for security, Infohabitants should not have access to the World. A simple mechanism is used to provide the appropriate access to the World. The World implementation in Java allows any Object to get a reference to the World as long as it does not yet contain any Environments. Once it contains one or more Environments, this mechanism is disabled (however, any Object that already obtained a reference to the World can still use it). In practice this means that after the simulation has been created, access to the World is only available to "trusted" Objects that were created before the simulation was set up.

### Creates ListenerCookie

The world creates the ListenerCookie that Listeners need to observe InfohabitantGuardians and ConnectionEnds. Whenever a new Environment is added, it provides a reference to the ListenerCookie. The Environment on its turn, gives the reference also to every InfohabitantGuardian it creates. Lastly, the InfohabitantGuardian provides it to every ConnectionEnd it creates. In this way, the ListenerCookie is known to all kernel objects that need to use it. The World is the only kernel object that provides external access to the cookie. In this way, debugging tools can use it to listen to events (and visualise them when that is desired).

It should be noted that the use of cookies for controlling access is known. The following publication is an example: Czajkowski, G. & von Eicken, T. 1998 Jres: a resource accounting interface for Java. In: Proc. 1998 ACM OOPSLA Conference, Vancouver,, October 1998.

### Kernel Services

### The following services are offered by the DIET kernel:

New infohabitants can be created. To create an infohabitant, you specify the type of infohabitant to create and the parameters to use. The kernel checks the type of the infohabitant to ensure that it obeys a few basic rules. It checks that the type is an instance of (i.e. a subclass of) the "Basiclnfohabitant" class. The "Basiclnfohabitant" class is an Infohabitantlmp that obeys the basic rules. Its implementation is such (using normal Java/OO techniques) that subclasses cannot change this behaviour. The kernel also assigns a randomly generated name tag to the infohabitant. This is a simple, efficient mechanism to allocate names that are in practice unique. The infohabitant can choose its own family tag, but the kernel ensures that the identity of an infohabitant remains fixed throughout its lifetime.

Infohabitants can connect to other infohabitants in the same environment. Once connected, infohabitants can communicate by sending messages or passing additional objects to each other. By only allowing local connections, infohabitants can receive immediate feedback when sending a message. It was either delivered successfully, or it was rejected. Connections can be established in only two ways, by specifying either a complete identity or the family tag of the required infohabitant. Both look-up mechanisms can be implemented and used very efficiently. More complicated directory functionality can be built on top of this base functionality and provided by infohabitants if needed.

Infohabitants can move to another environment. Infohabitant mobility is useful to make the system more adaptable to changing circumstances. It allows an infohabitant to select from various execution environments, depending upon the availability and efficiency of environmental services, and it can help in the formation of neighbourhoods of social interaction between infohabitants. The kernel does not guarantee that every migration attempt succeeds. When an infohabitant wants to move, but the destination environment can not accept it, for example because it is currently off-line or has reached its full capacity, the infohabitant dies.

There is no specific event that triggers Infohabitants to move. This depends on the specific type (class) of Infohabitant. E.g. CarrierPigeons are implemented such that they always directly move after they have been created (more details below).

When an Infohabitant migrates to an Environment that is currently offline/full, it is simply not restarted and the Infohabitant is discarded. So, Infohabitants cannot do anything after this has happened. However, to minimise the risk of it dying, an Infohabitant can check beforehand if the Environment is offline or full. It can, for instance, create a "Scout" Infohabitant. The behaviour of a Scout can be very basic. On creation it moves to a given remote Environment. When it arrives at the remote Environemt, it immediately moves back to its original Environment. Here it contacts the Infohabitant that created it. The latter Infohabitant then "knows" that the remote Environment was available. This is no absolute guarantee that it still is (it could have gone off-line just after the Scout left), but makes it highly likely.

It should be noted that the DIET system intentionally does not attempt to provide any absolute guarantees, as this is impossible given the nature of the infrastructure - the remote environment can, in principle, terminate at any moment.

For both communication and migration the kernel support is minimal. It can therefore be implemented very efficiently. It also allows more sophisticated functionality to be build on top of it, implemented in a way best suited to the conditions in which it is used. The minimalistic implementation is partly achieved because the kernel only fullfills any request when it can easily do so, but immediately fails when it cannot. It has the additional advantage that it implicitly forces infohabitants to take the effect of their actions on their execution environment into account.

Another feature of the kernel is that explicit limits can be imposed on several elements in the system such as the number of threads that are in use and the size of the message buffer of every infohabitant. These limits help to make the DIET platform more robust with respect to system load. For example, when a new message arrives at an infohabitant whose incoming message buffer is full, it is simply rejected. This mechanism ensures that the system will not run out of memory when one or more infohabitants receive more messages than they can handle. It also exposes the sending infohabitant to the congestion so that it can adapt its behaviour accordingly.

These limits can be set by the user. For instance they can be set when the DIET software starts running (while the Environments are created), but some (e.g. the number of threads available) could easily be changed (by the user) while the system is running. The ThreadPool waits with creating Threads until they are first needed (so initially there are as many Threads as there are Threads in use). However, when the demand on Threads decreases, the ThreadPool may hang on to the Thread instead of discarding it (for sake of efficiency - there is a certain cost associated with creating Threads), as is shown in Figure 2. It means that there can be more Threads then there are Threads currently in use.

Another limit that the kernel can set is the maximum number of Connections that every Infohabitant can own. An Infohabitant "owns" a connection when it was the one that created it. This limit affects the "number of available connections" mentioned in Figure 12. These are (currently) all limits imposed by the kernel.

The kernel has also been designed to support lightweight infohabitants. The minimal requirements by an infohabitant on system resources such as memory and CPU use is very low. One interesting feature is that infohabitants can temporarily give up their thread when they do not need it. When an external event occurs, e.g. a message arrives, the kernel attempts to give it a thread again so that it can handle the message.

### THE ARC LAYER

The Application Reusable Components layer provides services that are typically useful to applications built on top of the DIET platform. They can be used whenever this is useful, but can be ignored or replaced by alternative implementations as well.

Above the core layer the DIET software platform will include a range of components that will draw upon ecological and evolutionary inspiration, as well as machine learning and other mechanisms, in order to provide diverse sources of flexibility to facilitate the adaptation of DIET agents to changing circumstances. This layer will also include the elements that support a range of information management and manipulation applications.

The ARC layer also provides infohabitants that offer services not directly provided by the DIET kernel. Infohabitants can access these services through their family tags. For example, the ARC layer defines a CarrierPigeon infohabitant that can be used to deliver messages to infohabitants in a different environment and thus provides basic remote communication. Other infohabitants defined in the ARC layer can use these CarrierPigeons to offer various more sophisticated ways to communicate remotely.

The CarrierPigeon itself can also not itself does not really communicate across environments, but it is used to do so. More precisely, the behaviour of a most basic CarrierPigeon is as follows. On creation it is given the address of an Infohabitant (which resides in a different Environment) and a message. It then migrates to the remote Environment, and when this was succesful, it delivers the message to the given Infohabitant. A more sophisticated implementation may wait for a reply, and return this reply to the Infohabitant that created the Infohabitant to send the original message.

The above explanation describes a very basic implementation of remote communication. A very basic implementation of Multi-cast communication is as follows. When an Infohabitant wants to multi-cast messages, it creates a "MultiCast" Infohabitant and provides it with the identities of all target Infohabitants. The MultiCast sends all messages it receives from the former Infohabitant to all other Infohabitants. Any replies are returned to it by the MultiCast, optionally prepended by a unique identifier to distinguish the Infohabitant that sent the reply. Once again, more sophisticated behaviours could be implemented, e.g. a MultiCast infohabitant could be responsible for several multi-cast relations.

### SERVICE PROVISION

In DIET, many services that are commonly found in the core of multi-agents sytems, are provided by infohabitants instead. Two examples are remote communication (communicating with Infohabitants in different Environments) and multi-cast communication (sending messages to groups of Infohabitants) as described above.

### A SIMPLE EXAMPLE OF SERVICE PROVISION

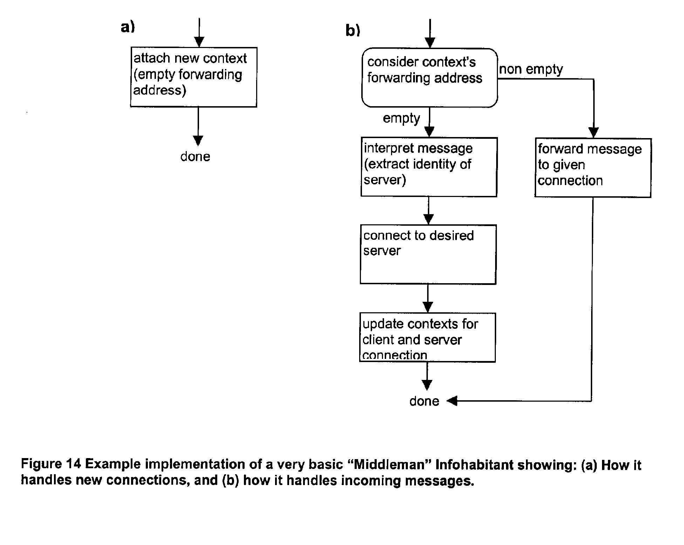

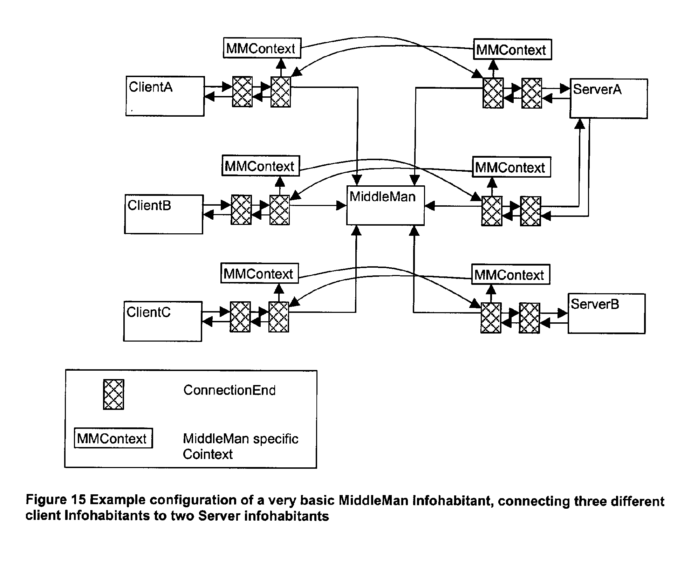

Referring to Figures 14 and 15, this section describes an implementation of a "MiddleMan" infohabitant. It illustrates how Contexts can be used effectively. The behaviour of the MiddleMan infohabitant described here is basic. It allows Infohabitants to communicate indirectly with other Infohabitants. It can, for instance, be used by Infohabitants that want to hide their identity for some reason (e.g. privacy). In this example, the Infohabitant that sets up a connection by way of the MiddleMan is refered to as a Client, whereas the other Infohabitant is refered to as a Server. After a Client has connected to the Middleman, it first sends a message identifying the Server it wants to connect to. The MiddleMan then sets up a connection to the Server. From then on, any message the Client sends to the MiddleMan is directly forwarded to the Server. Similarly, any messages the server sends in reply are passed back to the Client.

Figure 14 shows how the MiddleMan can implement its behaviour. Whenever it handles a new connection (which by definition is a Client), all it does is associate a MiddleMan specific context with it, which has an empty forwarding address. Whenever it receives a message, it first checks the Context associated with the connection. If the forwarding address is empty, it means it is the first message sent by the Client. It interprets the message and creates a connection to the desired Server (it should be noted that all error handling has been omitted for sake of simplicity). When it has done so, it updates both Contexts. For the Context associated with the connection to the Client, it sets the forwarding address to the newly created connection to the Server. For the Context associated with the connection to the Server, it sets the forwarding address to the connection associated with the Client.

When the forwarding address is non-empty, it means that it is a message which it can forward directly. Without distinguishing if it the message is from a Client or a Server, it forwards the message automatically to the appropriate other Infohabitant using the forwarding address. This simple behaviour is sufficient for the MiddleMan to be able to handle multiple Client-Server relationships at once.

Figure 15 shows an example configuration. Here a single MiddleMan is used for maintaining three Client-Server relationships. Note that two Clients (ClientA and ClientB) communicate with the same Server. This is handled without any problem, as the forwarding address associated with the connection tells to which Client any incoming message needs to go.

The Infohabitants blocks shown in Figure 15 are Infohabitantlmps. The Figure does not show the InfohabitantGuardians (for sake of simplicity).

It is important to realise that the implementation of the MiddleMan does not maintain any reference to its connections. (Its InfohabitantGuardian does, but these cannot be accessed by the MiddleMan's Infohabitantlmp.) It does not need to know the Clients and Servers that it is connected to. Whenever it needs to handle a new connection or an incoming message, all it needs to know is stored in the associated Context. In fact, this basic version of the MiddleMan does store any "infohabitant specific components" (see Figure 3).

The functionality of the MiddleMan described here is very basic. Typically, it would be more sophisticated. For instance, instead of letting Clients specify the Server directly, they could let Client describe the properties of the service it requires. The MiddleMan could then try to find a Server that best meets these requirements. In this case, the MiddleMan would typically maintain information about the various Servers it knows of. For each Server it would maintain a few basic properties such as its identity and published capabilities. However, it could also track dynamic properties, such as how quickly the server typically responds. It can easily track these, as all request from Clients and replies from Servers are handled by the MiddleMan. The table that maintains all this Server specific information would be one example of an Infohabitant specific component.

The DIET platform is geared towards a "bottom-up" software design. This is in the sense that a solution to a problem arises from functionality implemented at the level of the individual infohabitants, but emerges as a consequence of their collective interaction. (The contrast, "top-down", would be a centralised process sending instructions to infohabitants which they had to follow in implementing the solution.)

A simple example application demonstrating this is now described.

This application is built in layer three of the DIET architecture (recall that, from Figure 17, this layer, the application layer, is where application-specific code is located). It draws upon software components in the application reusable component (ARC) layer and in the core layer.

The application has been designed to arrange Linker infohabitants in a sorted sequence. The only two "infohabitant specific components" for the Linker infohabitant are references to its two Connections. One Connection to a Linker with a lower identity, and one Connection to a Linker with a higher identity. The Trigger has more "infohabitant specific components". Most importantly, a variable that controls how long it sleeps. It also has a few additional parameter that control how the sleep interval should increase after an attempt to send a message has failed.

The Linker infohabitants are sorted according to (the binary values of) their identity. All Linkers are passive and only react to incoming messages. Each tries to maintain a connection to two other Linkers: both as close as possible to its own identity but one with a lower identity and one with a higher identity. When a Linker receives a message with the identity of another Linker, it checks if it improves either of its existing links. If it does, it updates the link and sends its own identity to the corresponding Linker. Otherwise it forwards the received identity to the link with an identity closest to it. The sorting process is driven by Trigger infohabitants. They are active. Every once in a while they randomly select two Linkers and tell one about the other's identity. Figure 16 shows a screenshot of a visualisation of this application. Individual Linker and Trigger infohabitants are shown by blocks - lines between them indicate links being formed between infohabitants.

The application starts of because the Trigger infohabitants are active. Their behaviour is sufficient to start (and continue) the linking behaviour.

The application has a few interesting features. Firstly, although admittedly simple, this local and stochastic algorithm always leads to a perfectly sorted list. Secondly, as sequences get longer, a single trigger action typically results in a larger cascade of messages. Therefore, Triggers have a simple mechanism to adapt their activity to the perceived system load. This simple adaptation strategy means that the system operates close to optimal efficiency despite changing system load. Thirdly, the algorithm is robust.

Even when messages get lost or Linker infohabitants are killed, the algorithm keeps on functioning. Finally, the ability of the kernel to support light-weight infohabitants means that the application can run on a single computer with more than 100,000 Linker infohabitants.

## Claims

1. A system for distributed process management comprising a plurality of units of software for installation on computing platform, and further software for controlling the operation of the plurality of units in use of the system,
wherein each unit of software is provided with means for communicating with other units of software, and at least some of the units of software are further provided with means for providing one or more elements of a software process,
said further software being capable of defining at least one set of software units and controlling communications by the units in the set to be limited to communication only with other units of the set.

2. A system according to claim 1 wherein the further software defines more than one set of software units and at least one unit of software comprises a software process which migrates the unit between sets on creation of the unit.

3. A system according to either preceding claim wherein each unit of software requires to be allocated at least one thread by the operating system of the computing platform to support a sequence of process steps to be performed by the unit, said further software providing control of said allocation of threads.

4. A system according to claim 3 wherein the further software controls the allocation of threads by maintaining a set of threads for allocation to units of software on demand by a unit for the purpose of carrying out a process.

5. A system according to claim 4 wherein a unit of software ceases to exist in the event that it fails to be allocated a thread on demand.

6. A system according to either one of the preceding claims wherein a unit of software is maintained without an allocated thread In the event that it completes a process and has no requirement to initiate a further process.

7. A system according to any one of the preceding claims wherein each unit of software is allocated an identity, the identity having a part unique to the unit of software and a part common to all software units in its set.

8. A system according to claim 7 wherein a connection can be set up between units of software, at least one of said units of software being identified only by the identity part common to all software units of its set.

9. A system according to any one of claims 6 to 8 wherein communication between units of software is indirect, being established by means of proxies.

10. A system according to claim 9 wherein the proxy of at least one unit of software is provided with means to monitor and control any connection that the unit of software establishes.
